# EUROPÄISCHE PATENTSCHRIFT

(11) **EP 3 988 321 B1**
(45) Veröffentlichungstag und Bekanntmachung des Hinweises auf die Patenterteilung: **12.03.2025**
(21) Anmeldenummer: 21020517.5
(22) Anmeldetag: 18.10.2021
(51) Int. Cl.: B42D 25/324, B42D 25/328, B42D 25/369, B42D 25/373, B42D 25/425, C09C 1/00, C09D 11/037

(54) **HERSTELLUNG VON PIGMENTEN MIT DEFINIERTER GRÖSSE UND FORM**
PREPARATION OF PIGMENTS HAVING A DEFINED SIZE AND SHAPE
FABRICATION DE PIGMENTS DE TAILLE ET DE FORME DÉFINIES

(30) Priorität: 20.10.2020 DE 102020006456
(43) Veröffentlichungstag der Anmeldung: 27.04.2022
(73) Patentinhaber: Giesecke+Devrient Currency Technology GmbH, 81677 München (DE)
(72) Erfinder: Scherer, Maik Rudolf Johann, 82491 Grainau (DE); Scherer, Kai Herrmann, 81539 München (DE)
(74) Vertreter: Patentanwälte Geyer, Fehners & Partner mbB

(56) Entgegenhaltungen:
- EP-A1- 2 062 947
- WO-A1-2019/057322
- WO-A2-2007/105001
- US-A1- 2010 175 587

## Beschreibung

Die Erfindung betrifft ein Verfahren zur Herstellung von Pigmenten definierter Größe und Form, sowie damit hergestellte Pigmente.

Herstellungsverfahren zur Erzeugung von Pigmenten oder Partikeln sind bekannt aus EP 2 021 401 A2, WO 2007/105001 A2, US 9 095 899 B2 und US9850385 B2. Dabei werden Sollbruchstellen einer Schicht, aus der die Pigmente oder Partikel erzeugt werden, durch Vorsehen separater Zellen, die von sogenannten Wänden oder Rahmen umschlossen sind, in einer Matrize bereitgestellt, auf der die Schicht aufgebracht wird. EP 2 039 729 A2 und EP 2 062 947 A1 beschreiben ähnliche Herstellungsverfahren, bei denen geprägte oder geätzte Rahmen erzeugt werden. Mit den genannten Herstellungsverfahren werden in der Schicht, aus der die Pigmente oder Partikel erzeugt werden, Sollbruchstellen erzeugt, die mit den Rahmen/Wänden der Matrize korrelieren. Aus WO 2019/057322 A1 ist ein Verfahren zur Herstellung von Pigmenten bekannt, wonach eine mit Rissen strukturierte Schicht verwendet wird, auf der eine Pigmentschicht aufgebracht und abgelöst wird, um Pigmente zu erzeugen. Außerdem betrifft US 2010/0175587 A1 die Herstellung von Interferenzpigmenten auf Basis mehrfach beschichteter plättchenförmiger Substrate und deren Verwendung unter anderem in Lacken, Beschichtungen, Druckfarben, Kunststoffen und kosmetischen Präparaten.

Diese Herstellungsverfahren führen dazu, dass ein hoher Anteil der Fläche der Matrize von den Wänden oder Rahmen belegt ist. Dadurch wird die Ausbeute an Pigmenten signifikant verringert, insbesondere wenn Pigmente kleiner Dimensionen hergestellt werden sollen. Ferner kann dadurch eine große Menge kleiner Bruchstücke entstehen, die das optische Erscheinungsbild der Pigmente beeinträchtigen. Ferner können auf den Wänden/Rahmen der Matrize aufgebrachte Teile der Schicht, aus der die Pigmente erzeugt werden, unerwünscht an den eigentlichen Pigmenten verbleiben. Insbesondere bei geneigten Oberflächen der Wände/Rahmen kann dies zu unerwünschten optischen Effekten führen.

Es soll daher ein Verfahren zur Herstellung von Pigmenten hoher Qualität und hoher Ausbeute bereitgestellt werden.

Die Erfindung ist in den unabhängigen Ansprüchen 1, 14, und 15 definiert. Die abhängigen Ansprüche betreffen bevorzugte Weiterbildungen.

Eine Ausführungsform betrifft ein in Anspruch 1 definiertes Verfahren zur Herstellung von Pigmenten definierter Größe und Form.

Mit dem Verfahren werden teilweise begrenzte Oberflächenbereiche der Oberflächenstruktur erzeugt. Mit anderen Worten, benachbarte Oberflächenbereiche werden durch die dreidimensionalen Strukturelemente nur teilweise voneinander getrennt. Zudem wird die teilweise Begrenzung jedes Oberflächenbereichs durch eine Mehrzahl von dreidimensionalen Strukturelementen bewirkt. Mit anderen Worten, die begrenzenden dreidimensionalen Strukturelemente jedes Oberflächenbereichs sind fragmentiert. Somit werden die Oberflächenbereiche nicht durch durchgängige Wände oder Rahmen voneinander getrennt. Dadurch wird die Oberflächenbelegung mit den dreidimensionalen Strukturelementen minimiert und die Pigmentausbeute optimiert.

Die dreidimensionalen Strukturelemente führen ferner beim Ablösen der Pigmentmaterialschicht oder bei einem nachgelagerten Prozessschritt zu einem Brechen entlang der Verbindungslinie zwischen den nächsten Nachbarn der dreidimensionalen Strukturelemente. Die dreidimensionalen Strukturelemente und ihre Verbindungslinien zwischen nächsten Nachbarn geben also Sollbruchstellen und Bruchlinien beim Ablösen der Pigmentschicht und Erzeugen der Pigmente im Schritt c) vor. Die Sollbruchstellen stimmen dabei nicht vollständig mit den dreidimensionalen Strukturelementen überein, sondern umfassen auch die Bruchlinien. Die Bruchlinien führen überwiegend zu sauberen Bruchkanten, die in einem Winkel, in einigen Beispielen senkrecht, zur Fläche des Pigments verlaufen, unter Reduzierung von Artefakten an den Bruchkanten. Auf diese Weise wird vermieden, dass aktives und kostbares Pigmentmaterial an der Bruchlinie zwischen den dreidimensionalen Strukturelementen verloren geht. Gleichzeitig wird eine hohe Qualität der erzeugten Pigmente erhalten.

Das Verfahren ermöglicht somit sowohl eine Reduktion von Materialverlusten, als auch eine optimale Pigmentqualität und Flächenausbeute bei der Herstellung von Pigmenten mit definierter Form und Größe. Letzteres heißt, die von den dreidimensionalen Strukturelementen beanspruchte Fläche wird minimiert und die Pigmentausbeute wird optimiert. Je geringer der Materialverlust und je höher die Pigmentausbeute ist, desto wirtschaftlicher lassen sich die Pigmente produzieren.

Durch die geringe Oberflächenbelegung mit den dreidimensionalen Strukturelementen wird zudem die Menge an kleinen Bruchstücken, die beim Ablösen der Pigmentschicht entstehen, reduziert. Ferner wird die Menge an Teilen der Pigmentschicht, die auf den Wänden/Rahmen der Oberflächenstruktur aufgebracht waren und die beim Ablösen an den Pigmenten verbleiben, minimiert. So wird die Qualität der erzeugten Pigmente optimiert. Zudem kann eine wohldefinierte, enge Größenverteilung der Pigmente erhalten werden, so dass auf ein Zermahlen der Pigmente nach dem Ablösen der Pigmentmaterialschicht von der Oberflächenstruktur verzichtet werden kann.

Bei dem Verfahren können die Oberflächenbereiche jeweils zu 1% bis 99%, bevorzugt 10% bis 90%, mehr bevorzugt 30% bis 70%, von den dreidimensionalen Strukturelementen begrenzt werden. Dies ermöglicht, dass die Länge der Bruchlinien zwischen den nächsten Nachbarn der dreidimensionalen Strukturelemente variiert werden kann, unter Bereitstellung der vorgenannten positiven Wirkungen der im Verfahren gebildeten Oberflächenstruktur. Zudem kann das Ausmaß der Fragmentierung der dreidimensionalen Strukturelemente, d.h. das Ausmaß der Unterbrechungen zwischen den dreidimensionalen Strukturelementen, variiert werden, z.B. abhängig vom Pigmentmaterial.

Bei dem Verfahren kann die Oberflächenstruktur und/oder die Oberflächenbereiche von den dreidimensionalen Strukturelementen zu 0,1 bis 10%, bevorzugt weniger als 7% belegt werden. Durch einen derartigen Belegungsgrad der dreidimensionalen Strukturelemente wird gefördert, dass die dreidimensionalen Strukturelemente das optische Erscheinungsbild der erzeugten Pigmente nicht beeinträchtigen.

In dem Verfahren können die dreidimensionalen Strukturelemente getrennt voneinander angeordnet werden. Dies ermöglicht, wie oben erläutert, die Ausbildung der Bruchlinien zwischen den nächsten Nachbarn der dreidimensionalen Strukturelemente. Ferner können die dreidimensionalen Strukturelemente in Draufsicht auf die Oberflächenstruktur an Ecken und/oder Seiten der Oberflächenbereiche angeordnet werden. Die vorgenannten Maßnahmen fördern eine Minimierung der Oberflächenbelegung mit den dreidimensionalen Strukturelementen und eine optimale Pigmentausbeute.

In dem Verfahren kann jede Grenze zwischen benachbarten Oberflächenbereichen mit mindestens zwei der dreidimensionalen Strukturelemente versehen werden, die entlang der Grenze angeordnet werden. Dies bewirkt, dass an jeder Grenze zwischen benachbarten Oberflächenbereichen die oben beschriebene Bruchlinie bereitgestellt wird. Ferner kann zumindest ein Teil benachbarter Oberflächenbereiche mit einer teilweise zusammenhängenden Oberfläche ausgebildet werden. Dies gilt insbesondere für Oberflächenbereiche, die auf demselben Höhenniveau relativ zu einem Basisniveau der Oberflächenstruktur gebildet werden. Eine teilweise zusammenhängende Oberfläche benachbarter Oberflächenbereiche vereinfacht den Herstellungsprozess.

In dem Verfahren kann zumindest ein Teil der dreidimensionalen Strukturelemente in Draufsicht auf die Oberflächenstruktur als ein regelmäßiges, die Oberflächenbereiche teilweise begrenzendes Muster ausgebildet werden. Ferner kann zumindest ein Teil der dreidimensionalen Strukturelemente in Draufsicht auf die Oberflächenstruktur als ein Muster ausgewählt aus einem Polygonmuster, einem Muster zueinander komplementärer Formen und einem Freiformmuster ausgebildet werden. Mit einem feingliedrigen Muster der dreidimensionalen Strukturelemente können auch entsprechende, komplizierte Formen der Pigmente realisierbar sein, wie zum Beispiel Escher Motive.

In dem Verfahren kann zumindest ein Teil der Oberflächenbereiche parallel zu einem Basisniveau, insbesondere zu einer Ebene des Basisniveaus, der Oberflächenstruktur ausgebildet werden. Ferner kann zumindest ein Teil der Oberflächenbereiche mit einer schräg zu einem Basisniveau der Oberflächenstruktur verlaufenden Steigung ausgebildet werden. Durch diese Maßnahmen kann die Oberflächenstruktur mit planparallelen und/oder mit geneigten Oberflächen versehen werden, was je nach eingesetztem Verfahren zur Herstellung der Oberflächenstruktur im Schritt a) die Qualität der Pigmente günstig beeinflussen kann.

In dem Verfahren kann zumindest ein Teil der Oberflächenbereiche auf einem gleichen Höhenniveau ausgebildet werden. Dies begünstigt die Ausbildung der oben erläuterten Bruchkanten. Es kann zumindest ein Teil der Oberflächenbereiche auf unterschiedlichen Höhenniveaus ausgebildet werden. Dadurch kann die Ausbildung der Bruchkanten vereinfacht werden. In dem Verfahren kann ferner zumindest ein Teil benachbarter Oberflächenbereiche auf unterschiedlichen Höhenniveaus ausgebildet werden. Dies fördert eine Differenzierung benachbarter Pigmente im Schritt c) beim Ablösen der Pigmentschicht.

In dem Verfahren kann zumindest ein Teil der dreidimensionalen Strukturelemente als zwischen den Oberflächenbereichen angeordnete Erhebungen ausgebildet werden. Alternativ oder zusätzlich kann zumindest ein Teil der dreidimensionalen Strukturelemente als zwischen den Oberflächenbereichen angeordnete Vertiefungen ausgebildet werden. Dabei kann die Oberflächenstruktur zusammen mit den dreidimensionalen Strukturelementen mit binären, z.B. planparallelen, oder nicht-binären, z.B. V-förmigen, Querschnittsprofilen ausgeführt werden. Die binären Profile stellen eine sehr gute Sollbruchstelle dar. Bei nicht-binären Profilen kann die Pigmentschicht im Bereich der Wand relativ dünn aber durchgehend aufgebracht werden. Der Grad der Fragmentierung der dreidimensionalen Strukturelemente kann variieren. Beispielsweise können die Oberflächenbereiche in einem hohen Ausmaß durch die dreidimensionalen Strukturelemente voneinander getrennt sein. In anderen Beispielen können die Oberflächenbereiche in einem geringen Ausmaß durch die dreidimensionalen Strukturelemente voneinander getrennt sein und zusätzlich z.B. in der Höhe voneinander getrennt sein.

Ferner kann zumindest ein Teil der dreidimensionalen Strukturelemente als zwischen den Oberflächenbereichen angeordnete Entlüftungsstrukturen, z.B. Entlüftungsschlitze, ausgebildet werden. Letztere können insbesondere zwischen benachbarten, auf unterschiedlichen Höhenniveaus ausgebildeten Oberflächenbereichen als die dreidimensionalen Strukturelemente vorgesehen werden. Dadurch können bei Einsatz eines Prägeverfahrens im Schritt a) in den höheren Höhenniveaus, insbesondere im höchsten Höhenniveau, der Oberflächenstruktur Lufteinschlüsse entlang der Entlüftungsstrukturen entweichen.

In dem Verfahren kann zumindest ein Teil der dreidimensionalen Strukturelemente mit einer Breite von 0,2 µm bis 4 µm, bevorzugt 0,5 µm bis 3 µm, und/oder einer Höhe von 1 µm bis 10µm, bevorzugt 2 µm bis 6µm, ausgebildet werden. Insbesondere können die dreidimensionalen Strukturelemente als Wände oder Gräben mit einem entsprechenden Aspektverhältnis (Höhe zu Breite) ausgebildet werden. Beispielsweise können Colorshift(CS)-Pigmente mit einer doppelten CS-Beschichtung und einer typischen Gesamtschichtdicke von ca. 1µm mit einer Breite der dreidimensionalen Strukturen ausgebildet werden, die nicht kleiner als etwa 2µm ist. Die Abmessungen der Oberflächenbereiche können 5µm bis 50µm, bevorzugt 15µm bis 35µm betragen. Ferner kann zumindest ein Teil der dreidimensionalen Strukturelemente mit gleichen oder unterschiedlichen Abmessungen, insbesondere mit gleicher oder unterschiedlicher Höhe und/oder Breite, ausgebildet werden. Mit einem feingliedrigen Muster der dreidimensionalen Strukturelemente können auch komplizierte Formen der Pigmente realisierbar sein, wie zum Beispiel Escher Motive.

In dem Verfahren kann zumindest ein Teil der Oberflächenbereiche mit gleicher Größe und/oder gleicher Form ausgebildet werden. Dies fördert die Erzeugung einer wohldefinierten, engen Größenverteilung der Pigmente. Die Bereitstellung von Oberflächenbereichen gleicher Form führt zu einer hohen Ausbeute an im Wesentlichen gleichförmigen Pigmenten.

Die Oberflächenbereiche können zudem in parallelen, aneinander angrenzenden Spalten angeordnet werden. Durch diese Maßnahmen kann ein regelmäßiges Muster der Oberflächenbereiche erzeugt werden. Gleichzeitig wird die Anzahl der Oberflächenbereiche pro Flächeneinheit der Oberflächenstruktur optimiert. Mit Maßnahmen zur Ausbildung einer regelmäßigen Anordnung und/oder eines regelmäßigen Musters der Oberflächenbereiche kann die Ausbeute an im Wesentlichen gleichförmigen Pigmenten erhöht werden. Zudem kann eine wohldefinierte, enge Größenverteilung der Pigmente erhalten werden, so dass auf ein Zermahlen der Pigmente nach dem Ablösen der Pigmentmaterialschicht von der Oberflächenstruktur verzichtet werden kann.

In dem Verfahren kann zumindest ein Teil der Oberflächenbereiche in Draufsicht auf die Oberflächenstruktur mit einer Kontur ausgewählt aus einer Polygonkontur, einer zueinander komplementären Kontur und einer Freiformkontur ausgebildet werden. Beispielsweise besitzen die Oberflächenbereiche jeweils eine Fläche mit einer Polygonkontur oder einer Kontur eines Escher-Motivs. Dies fördert die Formenvielfalt der herstellbaren Pigmente. Die vorgenannten Maßnahmen unterstützen die Ausbildung von regelmäßigen, quasiperiodischen oder zufälligen Pigmentformen.

Ferner kann mindestens ein Teil der Oberflächenbereiche mit einer oder mehreren Markierungen versehen werden, z.B. durch Prägen. Diese führen aufgrund ihrer Profilhöhe und/oder Ausformung nicht zu Sollbruchstellen in der Pigmentmaterialschicht. Beispielsweise können Markierungen der Oberflächenbereiche in Form von Escher-Motiven als Basis für eine entsprechende Markierung der Pigmente eingesetzt werden, z.B. auf Flächen der Oberflächenbereiche. Die Oberflächenbereiche können ferner mit Markierungen zur Erzeugung beispielsweise von Hologrammen, Nanostrukturen und/oder Mikrospiegeln für optische Effekte versehen werden.

In dem Verfahren von Ausführungsformen kann im Schritt a) das Erzeugen der dreidimensionalen Oberflächenstruktur auf dem Substrat zumindest teilweise durch ein Prägeverfahren erfolgen. Beispielsweise kann auf das Substrat eine Prägeschicht aufgebracht werden, die geprägt wird. Alternativ kann die Oberfläche des Substrats geprägt werden oder das Substrat kann mit der dreidimensionalen Oberflächenstruktur gegossen werden. Das Prägeverfahren kann z.B. in einem Rolle-zu Rolle-Prozess erfolgen. Das Substrat kann beispielsweise eine Trägerfolie sein, z.B. aus PET (Polyethylenterephthalat), PE (Polyethylen), PC (Polycarbonat), PVC (Polyvinylchlorid), PMMA (Polymethylmethacrylat) oder einer Kombination davon. Das Substrat kann alternativ aus einem starren Material gebildet sein, wie z.B. Quarz oder Glas.

Im Schritt a) des Verfahrens kann das Erzeugen der dreidimensionalen Oberflächenstruktur durch ein Verfahren erfolgen, ausgewählt aus: a1) Einem Prägeverfahren mit den Schritten: Aufbringen einer löslichen, insbesondere wasserlöslichen, Prägeschicht als Release-Schicht auf das Substrat und Durchführen eines lithografischen, insbesondere photolithografischen, Prozesses, eines Heißprägens oder eines UV-Prägens; und/oder a2) einem Prägeverfahren mit den Schritten: Bereitstellen eines mittels Heißprägen verformbaren Substrats oder Aufbringen einer unlöslichen Prägeschicht auf das Substrat, Durchführen eines Heißprägens oder eines UV-Prägens; und Aufbringen einer löslichen, insbesondere wasserlöslichen, Release-Schicht. Mit den vorgenannten Verfahren können die Vorteile des Verfahrens von Ausführungsformen besonders umfangreich realisiert werden. Es können in den Schritten a1) und/oder a2) ferner Markierungen geprägt werden, beispielsweise zur Erzeugung flacher Hologramme, Nanostrukturen und/oder von Mikrospiegeln auf den Pigmenten für optische Effekte.

Im Schritt a1) können lithographische Prozesse mittels Belichten und Entwickeln eingesetzt werden, bei denen ein als Release-Schicht aufgebrachter Release-Lack gleichzeitig als ein photolithographischer Resist genutzt wird. Ferner kann das UV-Prägen durch Bestrahlen der Release-Schicht mit UV-Licht durchgeführt werden, wobei die Release-Schicht einen löslichen, im UV-Frequenzbereich aushärtbaren Prägelack enthält oder daraus gebildet ist.

Im Schritt a2) kann die Release-Schicht mit einer Schichtdicke von 50 bis 7000 nm, bevorzugt von 100 bis 5000 nm aufgebracht werden. Ferner kann die Release-Schicht als eine mit der dreidimensionalen Oberflächenstruktur im Wesentlichen konforme oder nicht-konforme Schicht aufgebracht werden, z.B. mit einer im Wesentlichen konstanten Schichtdicke. Die Prägeschicht kann einen unlöslichen Heißpräge- oder UV-Lack enthalten oder daraus gebildet sein. Bei Anwendung des Schritts a2) kann das mit der Prägeschicht versehene Substrat wiederverwendet werden.

Im Schritt b) des Verfahrens von Ausführungsformen kann eine Pigmentmaterialschicht enthaltend ein oder mehrere anorganische Materialien und/oder ein oder mehrere organische Materialien auf der Oberflächenstruktur aufgebracht werden. Beispielsweise kann im Schritt b) eine Pigmentmaterialschicht durch Aufdampfen (Physical Vapour Deposition PVD, Chemical Vapour Deposition CVD) oder andere Beschichtungsverfahren aufgebracht werden. Das Aufbringen der Pigmentmaterialschicht kann ferner in einem Rolle-zu Rolle-Prozess erfolgen. Die Pigmentmaterialschicht kann als Monolage oder als Multilage aus gleichen oder unterschiedlichen Materialien ausgebildet werden. Die Pigmentmaterialschicht kann eine Metallisierung sein oder eine Metallisierung enthalten. Als Materialien für die Pigmentmaterialschicht können beispielsweise eingesetzt werden, einzeln oder in beliebiger Kombination in einer oder mehreren Schichten: ein Farbkippeffekt-Material (Colorshift (CS) Material, Dünnschichtinterferenzbeschichtung), ein Phasenwechsel-Material (Phase Change Material); ein magnetisches Material; ein oder mehrere gleiche oder unterschiedliche Materialien ausgewählt aus einem Metall, einer Legierung, einem Dielektrikum, einem Oxid, einem Sulfid, und einem Fluorid. Beispielsweise kann ein Farbkippeffekt-Material in Form eines oder mit einem Phasenwechsel-Material verwendet werden oder es kann ein magnetisches Farbkippeffekt-Material verwendet werden. Des Weiteren kann die Pigmentmaterialschicht auch eine oder mehrere organische Schichten umfassen, die beispielsweise mittels PVD, CVD, Drucken oder Sprühen aufgebracht werden.

Im Schritt c) des Verfahrens kann das Ablösen erfolgen durch: mechanisches Ablösen, z.B. mittels einem Schaber, Einsetzen eines Präge- oder Metalltransfers, Einsetzen einer Release-Schicht und/oder einer Templatschicht und Auflösen derselben. Das Ablösen kann z.B. in einem Rolle-zu Rolle-Prozess erfolgen. Beim Ablösen kann die Pigmentmaterialschicht in Bruchstücke zerkleinert werden. Dadurch können die Pigmente in der gewünschten Größe und Form unmittelbar erzeugt werden und es kann ein kostenintensives Mahlen der Pigmente vermieden werden. Alternativ oder zusätzlich können die abgelöste Pigmentmaterialschicht oder deren Bruchstücke und/oder die Pigmente gemahlen werden. Die Mahlparameter werden so gewählt, dass die Pigmentmaterialschicht entlang der vorgesehen Sollbruchstellen zerbricht. Es kann eine Oberflächenbehandlung der Pigmente und/oder ein Trocknen der Pigmente durchgeführt werden. Beispielsweise kann die Pigmentmaterialschicht durch Auflösen einer im Verlauf des Verfahrens unterhalb der Pigmentmaterialschicht aufgebrachten Release-Schicht von der Oberflächenstruktur mit einem Lösungsmittel, insbesondere Wasser, abgelöst werden. Dabei kann es sich insbesondere um die durch die vorgenannten Schritte a1) und a2) erzeugten Release-Schichten handeln. Wird als Substrat eine Trägerfolie verwendet und wird auf dieser eine Oberflächenstruktur mit Vertiefungen als die dreidimensionalen Strukturelemente ausgebildet, kann im Schritt c) auch ein Trockenstripprozess zum Ablösen der Pigmentmaterialschicht eingesetzt werden.

Eine weitere Ausführungsform stellt in Anspruch 14 definierte Pigmente bereit, erhalten durch das Verfahren nach einem der vorstehenden Ansprüche.

Eine andere Ausführungsform betrifft eine Verwendung von Pigmenten der vorgenannten Ausführungsform in einer Druckfarbe.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. In den Figuren zeigen:
- Fig. 1a bis 1c: eine Schichtabfolge von Schritten eines ersten Ausführungsbeispiels des Verfahrens mit schematischen Querschnittsansichten;
- Fig. 2a und 2b: schematisch eine mit dem Verfahren des ersten Ausführungsbeispiels erzeugte Oberflächenstruktur in Draufsicht;
- Fig. 3: schematisch eine Oberflächenstruktur, die ebenfalls mit dem Verfahren des ersten Ausführungsbeispiels erhältlich ist;
- Fig. 4a bis 4d: schematisch Querschnitte dreidimensionaler Strukturelemente, die in Ausführungsbeispielen des Verfahrens gebildet werden können;
- Fig. 5a: schematisch in Draufsicht eine Oberflächenstruktur mit hexagonalen Oberflächenbereichen;
- Fig. 5b und 5c: schematisch in Draufsicht beispielhafte Oberflächenstrukturen mit hexagonalen Oberflächenbereichen;
- Fig. 6a bis 6c: schematisch in Draufsicht beispielhafte Oberflächenstrukturen mit hexagonalen Oberflächenbereichen;
- Fig. 7a bis 7c: schematisch in Draufsicht beispielhafte Oberflächenstrukturen mit hexagonalen Oberflächenbereichen und
- Fig. 8a bis 8c: schematisch in Draufsicht beispielhafte Oberflächenstrukturen mit hexagonalen Oberflächenbereichen und Fragmentierungen dreidimensionaler Strukturelemente.

Im Folgenden gilt für die Beschreibung von Wertebereichen, dass die Angabe eines breiten Bereichs mit engeren alternativen oder bevorzugten Bereichen auch Bereiche offenbart, die durch eine beliebige Kombination angegebener unterer Bereichsgrenzen mit angegebenen oberen Bereichsgrenzen gebildet werden können. Der Begriff "schräg zu einem Basisniveau der Oberflächenstruktur verlaufende Steigung" und Abwandlungen davon können vorliegend bedeuten, dass die Steigung relativ zu einer Ebene des Basisniveaus 0,01 bis 1, bevorzugt von 0,02 bis 0,75, besonders bevorzugt von 0,05 bis 0,5 beträgt.

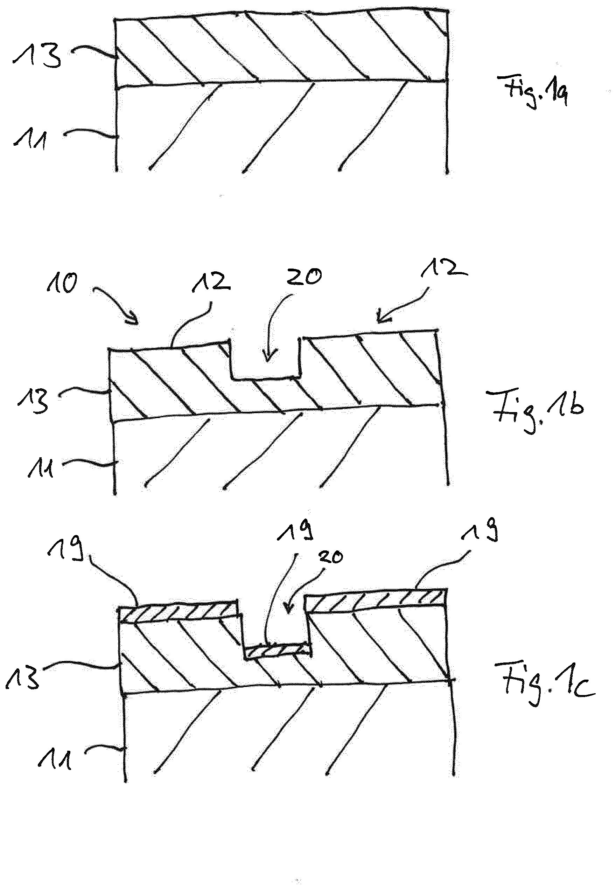

Fig. 1a bis 1c zeigen eine Schichtabfolge von Schritten eines ersten Ausführungsbeispiels des Verfahrens mit schematischen Querschnittsansichten. Im ersten Ausführungsbeispiel wird im Schritt a) des Verfahrens eine dreidimensionale Oberflächenstruktur durch ein Prägeverfahren erzeugt.

Hierfür wird, wie in Fig. 1a dargestellt ist, eine Trägerfolie aus PET (Polyethylenterephthalat) als ein Substrat 11 bereitgestellt, auf die eine Prägeschicht aus einem löslichen Prägelack 13 aufgebracht wird, die auch als Release-Schicht fungiert. Es wird dabei eine wasserlösliche Prägeschicht aus beispielsweise Polyinylpyrrolidon (PVP), modifizierte Stärke, Polyacrylsäure, Polyethylenglycol, Hydroxypropylcellulose, Hydroxyethylcellulose, Casein, Gummi arabicum, Carboxymethylcellulose, Polyvinylalkohol (PVOH), Dextrin, oder einem Gemisch zweier oder mehrerer der vorstehend genannten Stoffe als ein thermoplastischer Heißprägelack mit einem Rolle-zu-Rolle-Prozess auf der Trägerfolie hergestellt. Im vorliegenden Beispiel wird PVOH verwendet. Die wasserlösliche Prägeschicht kann mit einer Schichtdicke von 500nm bis 20µm aufgedruckt werden. Die Release-Schicht kann beispielsweise mittels Tiefdruck, Flexodruck, Schlitzdüse oder Sprühdüse aufgetragen werden. Alternative thermoplastische Heißprägelacke können ausgewählt sein aus beispielsweise PMMA, PVA, PS, die in anderen Lösungsmitteln als Wasser löslich sind.

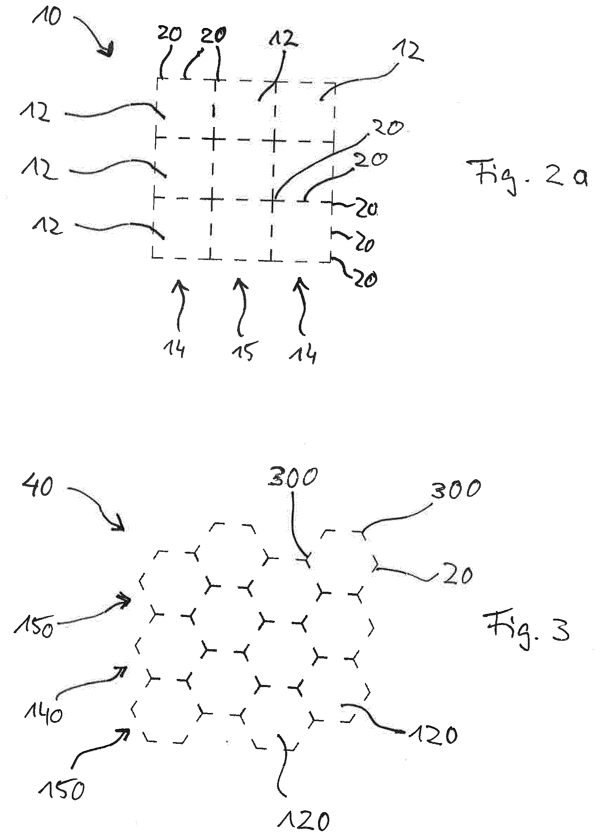

Danach wird, wie in Fig. 1b gezeigt ist, in einem Rolle-zu Rolle-Prozess durch Heißprägen des Prägelacks 13 eine Oberflächenstruktur 10 mit im Wesentlichen gleichförmigen Oberflächenbereichen 12 auf gleichem Höhenniveau erzeugt. Der Prägelack kann dabei nur teilweise geprägt werden. Alternativ kann auch eine thermoplastisch verformbare Trägerfolie heißgeprägt werden. Die Oberflächenbereiche 12 werden dabei jeweils von einer Mehrzahl von Gräben 20 als dreidimensionale Strukturelemente teilweise begrenzt. Die Gräben 20 besitzen im Querschnitt eine rechteckige Kontur mit in Wesentlichen senkrechten Seitenwänden einer Höhe von z.B. 2 µm und einer Grundfläche einer Breite von z.B. 2 µm. Das Aspektverhältnis der Gräben beträgt also 1:1.Die Oberflächenbereiche 12 bilden in Draufsicht ein Muster mit quadratischen Einheiten, wie z.B. in Fig. 2a veranschaulicht ist, und sind in Spalten 14, 15 angeordnet.

Wie Fig. 1c zeigt, wird im Schritt b) des Verfahrens eine Pigmentmaterialschicht 19 bestehend aus Kupfer auf der Oberflächenstruktur 10, d.h. auf der Prägeschicht 13 mit den Oberflächenbereichen 12 und den Gräben 20, mit einem Rolle-zu-Rolle-Prozess aufgebracht. In alternativen Beispielen kann eine Pigmentmaterialschicht 19 bestehend aus einer mehrschichtigen Interferenzbeschichtung, gegebenenfalls doppelten Interferenzbeschichtung, aufgebracht werden. Die Pigmentmaterialschicht 19 wird dabei auf den Oberflächenbereichen 12 sowie in den Gräben 20 vorgesehen. Die Gräben 20 bilden ein binäres, mit den Oberflächenbereichen 12 planparalleles Querschnittsprofil. Die binären Profile stellen eine sehr gute Sollbruchstelle dar, da die aufgebrachte Pigmentschicht durch den Höhenunterschied unterbrochen ist. Auf diese Weise werden in der auf der Oberflächenstruktur aufgebrachten Pigmentmaterialschicht 19 Sollbruchstellen für die Erzeugung der Pigmente bereitgestellt.

Fig. 2a zeigt schematisch die mit dem Verfahren des ersten Ausführungsbeispiels erzeugte Oberflächenstruktur 10 in Draufsicht. Die quadratischen Oberflächenbereiche 12 sind in zueinander parallelen Spalten 14 und 15 angeordnet. Die Gräben 20 besitzen an den Ecken der Oberflächenbereiche 12 eine Kreuzform, und an den Seiten der Oberflächenbereiche 12 eine Längsform. So bilden die Gräben 20 ein die Oberflächenbereiche begrenzendes Muster aus. Aufgrund der Abstände zwischen den Gräben 20 sind die Oberflächen benachbarter Oberflächenbereiche 12 miteinander verbunden.

Im Schritt c) des Verfahrens (nicht gezeigt) wird die Pigmentmaterialschicht 19 bestehend aus Kupfer von der Oberflächenstruktur 10 abgelöst, indem der Prägelack aus PVOH der Release-Schicht mit Wasser aufgelöst wird. Besteht der Prägelack der Release-Schicht aus einem wasserunlöslichen Thermoplasten, werden andere Lösungsmittel eingesetzt. Die Gräben 20 geben die Sollbruchstellen und die Verbindungslinien zwischen den nächstgelegenen Gräben 20 geben Bruchlinien beim Ablösen der Pigmentschicht 19 und Erzeugen der Pigmente im Schritt c) vor. Die Bruchlinien zwischen den Gräben 20 sind im vorliegenden Beispiel bei einem Durchmesser der erzeugten Pigmente von ungefähr 25 µm ungefähr 15 µm lang. Beim Ablösen der Pigmentmaterialschicht 19 wird durch Aufbrechen an den Gräben 20 und an den Bruchlinien zwischen den Gräben 20 der Pigmentmaterialschicht 19 eine Vielzahl von Kupfer-Pigmenten mit im Wesentlichen gleicher quadratischer Form und mit einer engen Größenverteilung erzeugt. Bei Verwendung einer mehrschichtigen Interferenzbeschichtung als Pigmentmaterialschicht 19 werden Interferenzpigmente erzeugt.

Die Sollbruchstellen stimmen beim Ablösen der Pigmentmaterialschicht 19 nicht vollständig mit den Gräben 20 überein, sondern umfassen auch die Bruchlinien dazwischen. Die Bruchlinien führen überwiegend zu sauberen Bruchkanten, die im vorliegenden Beispiel senkrecht zur Fläche des Pigments verlaufen. Auf diese Weise wird vermieden, dass aktives und kostbares Pigmentmaterial an der Bruchlinie zwischen den dreidimensionalen Strukturelementen verloren geht. Gleichzeitig werden eine hohe Ausbeute und eine hohe Qualität der erzeugten Pigmente erhalten.

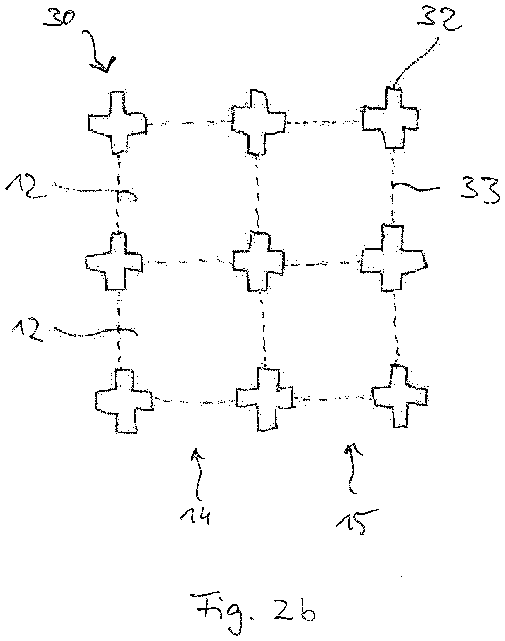

Fig. 2b zeigt schematisch eine Oberflächenstruktur 30 einer Größe von 20 µm x 20 µm, die ebenfalls mit dem Verfahren des ersten Ausführungsbeispiels erhältlich ist. Die Oberflächenbereiche 12 bilden in Draufsicht ein Muster mit quadratischen Einheiten und sind in Spalten 14, 15 angeordnet. Gräben 32 sind nur an den Ecken der Oberflächenbereiche 12 ausgebildet und besitzen eine Kreuzform. Auf diese Weise bilden die Gräben 32 ein die Oberflächenbereiche 12 begrenzendes Muster aus. Die Gräben 32 besitzen im Wesentlichen senkrechte Seitenwände einer Höhe von z.B. 2 µm und eine Grundfläche mit einer Breite von z.B. 2 µm. Die Gräben 32 geben die Sollbruchstellen und die Verbindungslinien zwischen den nächstgelegenen Gräben 32 geben die Bruchlinien 33 beim Ablösen der Pigmentschicht 19 und Erzeugen der Pigmente im Schritt c) vor. Die Bruchlinien 33 zwischen den Gräben sind im vorliegenden Beispiel 15 µm lang. Beim Ablösen der Pigmentmaterialschicht 19 wird durch Aufbrechen an den Gräben 32 und an den Bruchlinien 33 zwischen den Gräben 32 der Pigmentmaterialschicht 19 eine Vielzahl von Kupfer-Pigmenten mit im Wesentlichen gleicher quadratischer Form und mit einer engen Größenverteilung erzeugt.

Fig. 3 zeigt schematisch eine Oberflächenstruktur 40, die ebenfalls mit dem Verfahren des ersten Ausführungsbeispiels erhältlich ist. Die Oberflächenbereiche 120 bilden in Draufsicht ein Muster mit hexagonalen Einheiten und sind in Spalten 140, 150 angeordnet. Als die Oberflächenbereichen 120 begrenzende dreidimensionale Strukturelemente werden Wände 300 ausgebildet. Die Wände 300 werden nur an den Ecken der Oberflächenbereiche 120 ausgebildet. Die Wände 300 besitzen beispielsweise im Wesentlichen senkrechte Seitenwände einer Höhe von z.B. 2,5 µm und eine Breite von z.B. 2 µm. Die Wände 300 geben die Sollbruchstellen und die Verbindungslinien zwischen den nächstgelegenen Wänden 300 geben die Bruchlinien beim Ablösen der Pigmentschicht 19 und Erzeugen der Pigmente im Schritt c) vor.

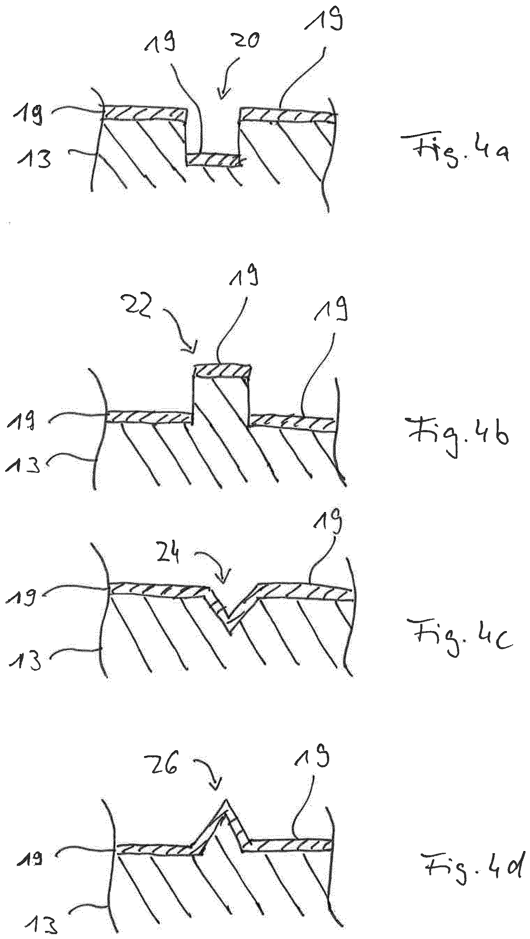

Fig. 4a bis 4d veranschaulichen schematisch Varianten von Querschnitten dreidimensionaler Strukturelemente, die in Ausführungsbeispielen des Verfahrens gebildet werden können. Fig. 4a zeigt die mit der Pigmentmaterialschicht 19 bedeckte Oberflächenstruktur 10, die mit dem ersten Ausführungsbeispiel des Verfahrens erzeugt wird und in Fig. 1c dargestellt ist. Alternativ können beim Prägeschritt a) des Verfahrens in der Prägeschicht 13 statt Gräben Wände 22 als dreidimensionale Strukturelemente gebildet werden, wie Fig. 4b veranschaulicht. Auch die Ausbildung der Wände 22 führt zu einem binären Querschnittsprofil der Oberflächenstruktur, wobei die Wände 22 mit den Oberflächenbereichen 12 planparallel gebildet werden. Auch dieses binäre Profil stellt eine sehr gute Sollbruchstelle dar, da die aufgebrachte Pigmentschicht 19 durch den Höhenunterschied unterbrochen ist. Statt der Gräben 20 mit einer rechteckigen Querschnittskontur und im Wesentlichen senkrechten Seitenwänden können Gräben 24 einer Breite von z.B. 2 µm mit schrägen Seitenwänden einer Höhe von z.B. 2 µm erzeugt werden, wie in Fig. 4c dargestellt ist. Alternativ können Wände 26 mit einer Breite von z.B. 2,5 µm und schrägen Seitenwänden einer Höhe von z.B. 3 µm als dreidimensionale Strukturelemente gebildet werden, wie Fig. 4d veranschaulicht.

Ein zweites Ausführungsbeispiel des Verfahrens umfasst ebenfalls drei Schritte. Im Schritt a) wird eine dreidimensionale Oberflächenstruktur durch ein Prägeverfahren erzeugt. Hierfür wird eine Trägerfolie aus PET (Polyethylenterephthalat) als das Substrat bereitgestellt. Auf die Oberfläche der Trägerfolie wird eine unlösliche Prägeschicht 13 aus wasser-unlöslichem Heißprägelack PMMA (Polymethylmethacrylat) in einem Rolle-zu-Rolle-Prozess aufgebracht. Alternative wasserunlösliche thermoplastische Heißprägelacke sind PVA (Polyvinylacetat) oder PS (Polystyrol). In der Prägeschicht 13 wird analog wie im ersten Beispiel mit einem Rolle-zu Rolle-Prozess durch Heißprägen eine Oberflächenstruktur 10 mit gleichförmigen Oberflächenbereichen 12 erzeugt, die jeweils eine quadratische, ebene Fläche 16 aufweisen und in Spalten 14 und 15 angeordnet sind.

Auf die im Schritt a) des zweiten Ausführungsbeispiels erzeugte Oberflächenstruktur 10 wird eine Release-Schicht (nicht gezeigt) aus wasserlöslichem PVOH in einem Rolle-zu-Rolle-Prozess aufgedruckt. Die Schichtdicke der Release-Schicht ist im Vergleich zur Höhendifferenz der Oberflächenbereiche 12 so gewählt, dass sie diese abdeckt und die Erhebungen und Vertiefungen der Oberflächenstruktur 10 nachbildet. D.h. die Release-Schicht wird als mit der Oberflächenstruktur 10 konforme Schicht ausgebildet. Die Release-Schicht kann bevorzugt mit einer Schichtdicke von 50nm bis 2µm aufgebracht werden. Die Release-Schicht kann beispielsweise mittels Tiefdruck, Flexodruck, Schlitzdüse oder Sprühdüse aufgetragen werden. Im vorliegenden Beispiel wird mittels Tiefdruck eine PVOH-Schicht von 500nm aufgedruckt.

Im Schritt b) des Verfahrens wird eine Pigmentmaterialschicht aus Aluminium (nicht gezeigt) auf die Release-Schicht mit einem PVD-Verfahren aufgebracht. Es werden in der auf der Release-Schicht aufgebrachten Pigmentmaterialschicht wie oben zum ersten Ausführungsbeispiel erläutert Sollbruchstellen und Bruchlinien für die spätere Erzeugung der Pigmente bereitgestellt.

Im Schritt c) des Verfahrens wird die Pigmentmaterialschicht aus Aluminium von der Oberflächenstruktur 10 abgelöst, indem die Release-Schicht mit Wasser aufgelöst wird. Dabei wird durch Aufbrechen an den Sollbruchstellen der Pigmentmaterialschicht eine Vielzahl von Aluminium-Pigmenten mit im Wesentlichen gleicher hexagonaler Kontur mit einer engen Größenverteilung erzeugt.

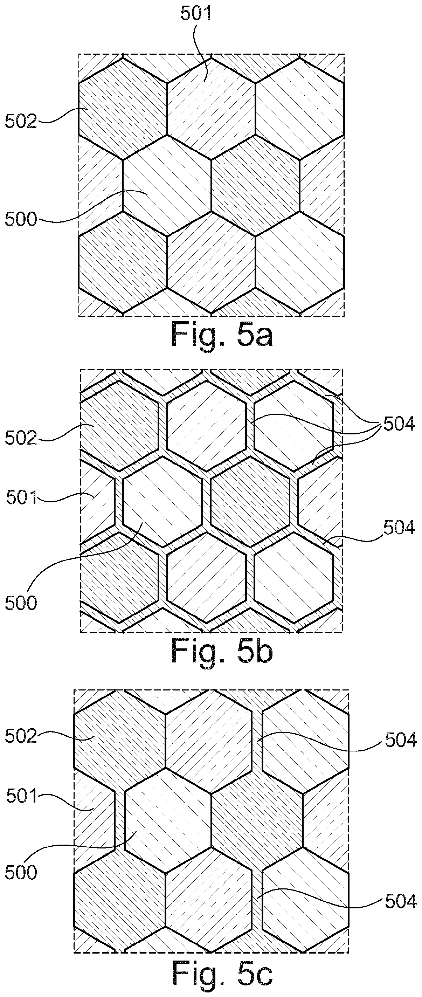

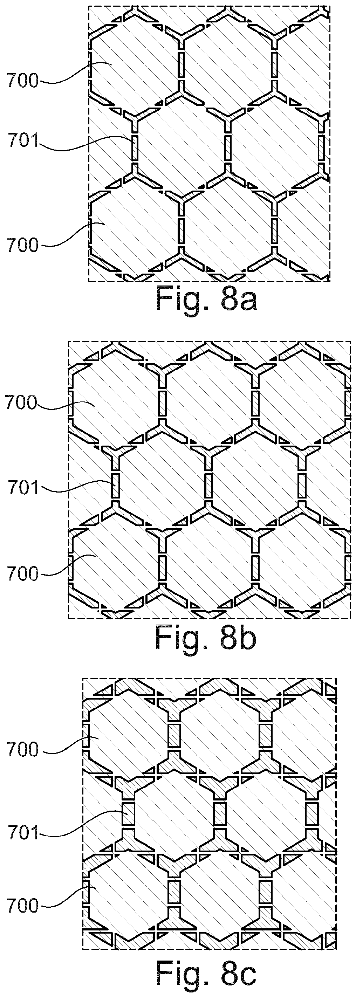

Die Fig. 5a bis 5c veranschaulichen schematisch in Draufsicht Oberflächenstrukturen mit hexagonalen Oberflächenbereichen. Die beispielhaften Oberflächenstrukturen der Fig. 5b und 5c können mit dem ersten oder dem zweiten Ausführungsbeispiel des Verfahrens erzeugt werden. Hierbei werden die Oberflächenbereiche im Schritt a) auf drei unterschiedlichen Höhenniveaus ausgebildet. In Fig. 5a bis 5c sind die Oberflächenbereiche unterschiedlicher Höhen unterschiedlich hell dargestellt. Die Oberflächenbereiche 502 (geringe Helligkeit) befinden sich auf dem höchsten Höhenniveau, die Oberflächenbereiche 500 (hohe Helligkeit) befinden sich auf dem niedrigsten Höhenniveau und die Oberflächenbereiche 501 (mittlere Helligkeit) befinden sich auf einem zwischen den Höhenniveaus der Oberflächenbereiche 500 und 502 gelegenen Höhenniveau. Die Höhenvariation beträgt beispielsweise 2 bis 5 µm. Die Oberflächenbereiche 500 und 501 des Beispiels der Fig. 5b werden jeweils auf drei von sechs Seiten der hexagonalen Kontur mit Gräben 504 (schwarz dargestellt) als dreidimensionale Strukturelemente begrenzt. Die Gräben 504 sind so tief wie der Höhenunterschied zwischen den Oberflächenbereichen 500 und 502 im Gesamten und sind fragmentiert (nicht in Fig. 5b gezeigt). Die Fragmentierung ist analog wie in Fig. 8a bis 8c veranschaulicht realisiert. Bei den Oberflächenbereichen 501 bis 503 des Beispiels der Fig. 5c werden nur die benachbarten Oberflächenbereiche 500 und 501 auf einer der Seiten der hexagonalen Kontur mit Gräben als dreidimensionale Strukturelemente, also teilweise abgetrennt. Die Gräben der Oberflächenstruktur der Fig. 5c weisen eine Fragmentierung (nicht in Fig. 5c gezeigt) analog wie in Fig. 8a bis 8c veranschaulicht auf. Die Gräben der Oberflächenstrukturen der Fig. 5b und 5c sind so tief wie der Höhenunterschied zwischen den Oberflächenbereichen 500 und 502 im Gesamten. Die Gräben 504 dienen als Entlüftungsschlitze beim Prägen, so dass bei der Prägung im höchsten Niveau Lufteinschlüsse entlang der Gräben entweichen können.

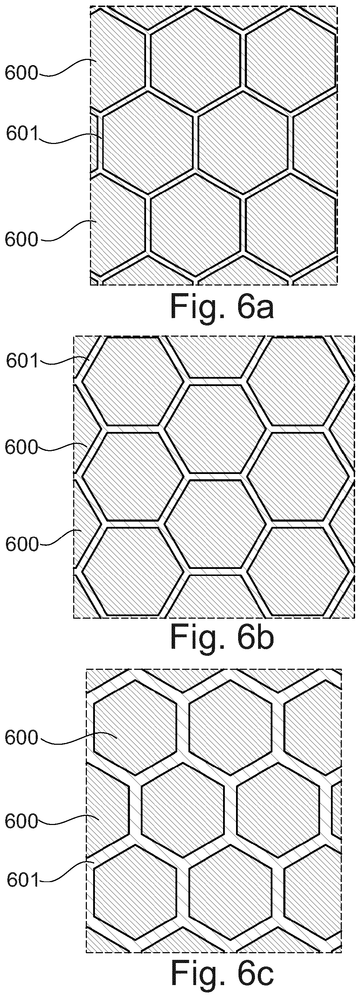

Die Fig. 6a bis 6c veranschaulichen schematisch in Draufsicht beispielhafte Oberflächenstrukturen mit hexagonalen Oberflächenbereichen 600, die mit dem ersten oder dem zweiten Ausführungsbeispiel des Verfahrens erzeugt werden. Die Oberflächenbereiche 600 werden im Schritt a) auf einem Höhenniveau ausgebildet und werden durch Gräben 601 als dreidimensionale Strukturelemente begrenzt, die fragmentiert sind (nicht in Fig. 6 a bis 6c gezeigt). Die Fragmentierung ist analog wie in Fig. 8a bis 8c veranschaulicht realisiert. Die Breite der Gräben 601 nimmt von Fig. 6a bis Fig. 6b zu.

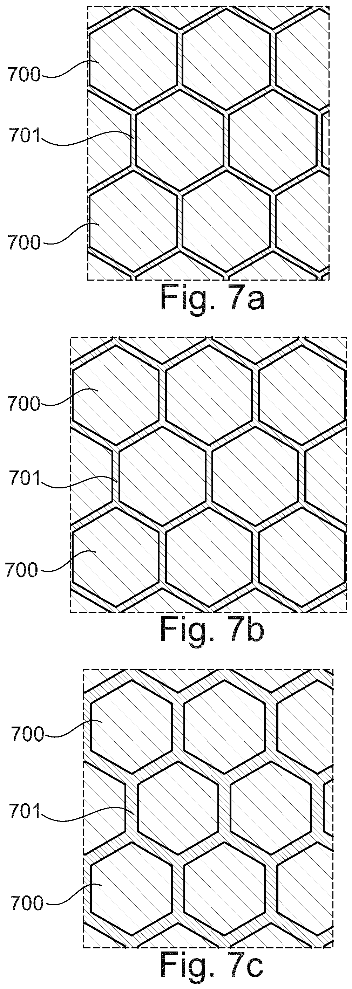

Die Fig.7a bis 7c und Fig. 8a bis 8c veranschaulichen schematisch in Draufsicht beispielhafte Oberflächenstrukturen mit hexagonalen Oberflächenbereichen 700. Diese können mit dem ersten oder dem zweiten Ausführungsbeispiel des Verfahrens erzeugt werden. Hierbei werden die Oberflächenbereiche 700 im Schritt a) auf einem Höhenniveau ausgebildet und werden durch Wände 701 als dreidimensionale Strukturelemente begrenzt, die fragmentiert sind. Die Fragmentierung ist nicht in Fig. 7a bis 7c gezeigt, jedoch in Fig. 8a bis 8c dargestellt. Die Breite der Wände 701 nimmt von Fig. 7a bis Fig. 7b bzw. von Fig. 8a bis fig. 8c zu.

Alle Ausführungsformen und Ausführungsbeispiele ermöglichen eine Verringerung des Flächenanteils der Oberflächenstruktur, der mit den dreidimensionalen Strukturelementen belegt ist, die die Oberflächenbereiche begrenzen. Dadurch wird eine höhere Ausbeute mit engerer Größenverteilung der Pigmente unter Vermeidung von Artefakten an den Bruchkanten der Pigmente erreicht.

### Bezugszeichenliste

- 10: Oberflächenstruktur
- 11: Substrat
- 12: Oberflächenbereich
- 13: Prägeschicht
- 14: Spalte
- 15: Spalte
- 19: Pigmentmaterialschicht
- 20: Graben
- 22: Wand
- 24: Graben
- 26: Wand
- 30: Oberflächenstruktur
- 32: Graben
- 33: Bruchlinie
- 40: Oberflächenstruktur
- 120: Oberflächenbereich
- 140: Spalte
- 150: Spalte
- 300: Wand
- 500: Oberflächenbereich
- 501: Oberflächenbereich
- 502: Oberflächenbereich
- 504: Graben
- 600: Oberflächenbereich
- 601: Graben
- 700: Oberflächenbereich
- 701: Wand

## Patentansprüche

1. Verfahren zur Herstellung von Pigmenten definierter Größe und Form, mit den Schritten:
a) Erzeugen einer dreidimensionalen Oberflächenstruktur (10; 30; 40) auf einem Substrat (11), wobei in Spalten (14, 15; 140,150) angeordnete Oberflächenbereiche (12; 120; 500, 501, 502; 600; 700) gebildet werden, die jeweils von einer Mehrzahl dreidimensionaler Strukturelemente (20; 22; 24; 26; 32; 300; 504; 601; 701) begrenzt werden;
b) Aufbringen einer Pigmentmaterialschicht (19) auf die Oberflächenstruktur (10; 30; 40);
c) Ablösen der Pigmentmaterialschicht (19) von der Oberflächenstruktur (10; 30; 40) und Erzeugen von Pigmenten,
**dadurch gekennzeichnet, dass**
im Schritt a) benachbarte Oberflächenbereiche durch die dreidimensionalen Strukturelemente nur teilweise voneinander getrennt werden und ansonsten miteinander verbunden bleiben.

2. Verfahren nach Anspruch 1,
wobei die Oberflächenbereiche jeweils zu 1% bis 99%, bevorzugt 10% bis 90%, mehr bevorzugt 30% bis 70%, von den dreidimensionalen Strukturelementen (20; 22; 24; 26; 32; 300; 504; 601; 701) begrenzt werden;
und / oder
wobei die Oberflächenstruktur (10; 30; 40) und/oder die Oberflächenbereiche von den dreidimensionalen Strukturelementen (20; 22; 24; 26; 32; 300; 504; 601; 701) zu 0,1 bis 10%, bevorzugt weniger als 7% belegt wird.

3. Verfahren nach einem der vorstehenden Ansprüche,
wobei die dreidimensionalen Strukturelemente (20; 22; 24; 26; 32; 300; 504; 601; 701) getrennt voneinander angeordnet werden; und/oder
wobei die dreidimensionalen Strukturelemente (20; 22; 24; 26; 32; 300; 504; 601; 701) in Draufsicht auf die Oberflächenstruktur (10; 30; 40) an Ecken und/oder Seiten der Oberflächenbereiche (12; 120; 500, 501, 502; 600; 700) angeordnet werden.

4. Verfahren nach einem der vorstehenden Ansprüche,
wobei jede Grenze zwischen benachbarten Oberflächenbereichen (12; 120; 500, 501, 502; 600; 700) mit mindestens zwei der dreidimensionalen Strukturelemente (20; 22; 24; 26; 32; 300; 504; 601; 701) versehen wird, die entlang der Grenze angeordnet werden; und/oder
wobei zumindest ein Teil benachbarter Oberflächenbereiche mit einer teilweise zusammenhängenden Oberfläche ausgebildet wird.

5. Verfahren nach einem der vorstehenden Ansprüche,
wobei zumindest ein Teil der dreidimensionalen Strukturelemente (20; 22; 24; 26; 32; 300; 504; 601; 701) in Draufsicht auf die Oberflächenstruktur (10; 30; 40) als ein regelmäßiges, die Oberflächenbereiche (12; 120; 500, 501, 502; 600; 700) teilweise begrenzendes Muster ausgebildet werden; und/oder
wobei zumindest ein Teil der dreidimensionalen Strukturelemente (20; 22; 24; 26; 32; 300; 504; 601; 701) in Draufsicht auf die Oberflächenstruktur (10; 30; 40) als ein Muster ausgewählt aus einem Polygonmuster, einem Muster zueinander komplementärer Formen und einem Freiformmuster ausgebildet werden.

6. Verfahren nach einem der vorstehenden Ansprüche,
wobei zumindest ein Teil der Oberflächenbereiche (12; 120; 500, 501, 502; 600; 700) parallel zu einem Basisniveau der Oberflächenstruktur ausgebildet wird; und/oder
wobei zumindest ein Teil der Oberflächenbereiche mit einer schräg zu einem Basisniveau der Oberflächenstruktur verlaufenden Steigung ausgebildet wird.

7. Verfahren nach einem der vorstehenden Ansprüche,
wobei zumindest ein Teil der Oberflächenbereiche auf einem gleichen Höhenniveau ausgebildet wird; und/oder
wobei zumindest ein Teil der Oberflächenbereiche auf unterschiedlichen Höhenniveaus ausgebildet wird; und/oder
wobei zumindest ein Teil benachbarter Oberflächenbereiche auf unterschiedlichen Höhenniveaus ausgebildet wird.

8. Verfahren nach einem der vorstehenden Ansprüche,
wobei zumindest ein Teil der dreidimensionalen Strukturelemente als zwischen den Oberflächenbereichen angeordnete Erhebungen ausgebildet werden; und/oder
wobei zumindest ein Teil der dreidimensionalen Strukturelemente als zwischen den Oberflächenbereichen angeordnete Vertiefungen ausgebildet werden; und/oder
wobei zumindest ein Teil der dreidimensionalen Strukturelemente als zwischen den Oberflächenbereichen angeordnete Entlüftungsstrukturen ausgebildet werden.

9. Verfahren nach einem der vorstehenden Ansprüche,
wobei zumindest ein Teil der dreidimensionalen Strukturelemente (20; 2; 24; 26; 32; 300; 504; 601; 701) mit einer Breite von 0,2 µm bis '4 µm, bevorzugt 0,5 µm bis 3 µm, und/oder einer Höhe von 1 µm bis 10µm, bevorzugt 2 µm bis 6µm, ausgebildet werden; und/oder
wobei zumindest ein Teil der dreidimensionalen Strukturelemente (20; 22; 24; 26; 32; 300; 504; 601; 701) mit gleichen oder unterschiedlichen Abmessungen ausgebildet werden.

10. Verfahren nach einem der vorstehenden Ansprüche,
wobei zumindest ein Teil der Oberflächenbereiche (12; 120; 500, 501, 502; 600; 700) mit gleicher Größe und/oder gleicher Form ausgebildet werden.

11. Verfahren nach einem der vorstehenden Ansprüche,
wobei zumindest ein Teil der Oberflächenbereiche (12; 120; 500, 501, 502; 600; 700) in Draufsicht auf die Oberflächenstruktur (10; 30; 40) mit einer Kontur ausgewählt aus einer Polygonkontur, einer zueinander komplementären Kontur und einer Freiformkontur ausgebildet werden;
und / oder
wobei zumindest ein Teil der Oberflächenbereiche mit einer oder mehreren Markierungen versehen werden.

12. Verfahren nach einem der vorstehenden Ansprüche,
wobei im Schritt a) das Erzeugen der dreidimensionalen Oberflächenstruktur (10; 30; 40) zumindest teilweise durch ein Prägeverfahren erfolgt; und/oder
wobei im Schritt a) das Erzeugen der dreidimensionalen Oberflächenstruktur (10; 30; 40) durch ein Verfahren erfolgt, ausgewählt aus:
a1) Einem Prägeverfahren mit den Schritten: Aufbringen einer löslichen Prägeschicht (13) als Release-Schicht auf das Substrat und Durchführen eines lithografischen, insbesondere photolithografischen, Prozesses, eines Heißprägens oder eines UV-Prägens; und
a2) Einem Prägeverfahren mit den Schritten: Bereitstellen eines mittels Heißprägen verformbaren Substrats oder Aufbringen einer unlöslichen Prägeschicht (130) auf das Substrat, Durchführen eines Heißprägens oder eines UV-Prägens; und Aufbringen einer löslichen, insbesondere wasserlöslichen, Release-Schicht.

13. Verfahren nach einem der vorstehenden Ansprüche,
wobei im Schritt b) eine Pigmentmaterialschicht (19) umfassend ein oder mehrere anorganische Materialien und/oder ein oder mehrere organische Materialien auf der Oberflächenstruktur (10; 30; 40) aufgebracht wird.

14. Pigmente, erhalten durch das Verfahren nach einem der vorstehenden Ansprüche.

15. Verwendung von Pigmenten nach Anspruch 14 in einer Druckfarbe.

## Claims

1. A method for producing pigments of defined size and shape, comprising the steps of:
a) producing a three-dimensional surface structure (10; 30; 40) on a substrate (11), surface regions (12; 120; 500, 501, 502; 600; 700) being formed which are arranged in columns (14, 15; 140, 150) and are each bordered by a defined by a plurality of three-dimensional structural elements (20; 22; 24; 26; 32; 300; 504; 601; 701);
b) applying a pigment material layer (19) to the surface structure (10; 30; 40);
c) detaching the pigment material layer (19) from the surface structure (10; 30; 40) and producing pigments,
**characterized in that**
in step a) adjacent surface regions are only partially separated from each other by the three-dimensional structural elements and otherwise remain connected to each other.

2. The method according to claim 1,
wherein the surface regions are bordered in each case by 1% to 99%, preferably 10% to 90%, more preferably 30% to 70%, of the three-dimensional structural elements (20; 22; 24; 26; 32; 300; 504; 601; 701);
and/or
wherein the surface structure (10; 30; 40) and/or the surface areas are occupied by the three-dimensional structural elements (20; 22; 24; 26; 32; 300; 504; 601; 701) from 0.1 to 10%, preferably less than 7%.

3. The method according to one of the preceding claims,
wherein the three-dimensional structural elements (20; 22; 24; 26; 32; 300; 504; 601; 701) are arranged separately from one another; and/or
wherein the three-dimensional structural elements (20; 22; 24; 26; 32; 300; 504; 601; 701) are arranged at corners and/or sides of the surface regions (12; 120; 500, 5 01, 502; 600; 700).

4. The method according to any of the preceding claims,
wherein each border between adjacent surface regions (12; 120; 500, 501, 502; 600; 700) is provided with at least two of the three-dimensional structural elements (20; 22; 24; 26; 32; 300; 504; 601; 701) arranged along the border; and/or
wherein at least a portion of adjacent surface regions are formed with a partially continuous surface.

5. The method according to any preceding claim,
wherein, as seen in a plan view of the surface structure (10; 30; 40), at least some of the three-dimensional structural elements (20; 22; 24; 26; 32; 300; 504; 601; 701) are configured as a regular pattern, which partially borders the surface regions (12; 120; 500, 501, 502; 600; 700); and/or
wherein at least some of the three-dimensional structural elements (20; 22; 24; 26; 32; 300; 504; 601; 701) are formed as a pattern selected from a polygon pattern, a pattern of mutually complementary shapes and a free-form pattern.

6. The method according to any of the preceding claims,
wherein at least a part of the surface regions (12; 120; 500, 501, 502; 600; 700) is formed parallel to a base level of the surface structure; and/or
wherein at least a part of the surface regions is formed with a slope oblique to a base level of the surface structure.

7. The method according to one of the preceding claims,
wherein at least some of the surface regions are formed at the same height level; and/or wherein at least some of the surface regions are formed at different height levels;
and/or
wherein at least some neighboring surface regions are formed at different height levels.

8. The method according to any one of the preceding claims,
wherein at least some of the three-dimensional structural elements are formed as elevations arranged between the surface regions; and/or
wherein at least some of the three-dimensional structural elements are formed as depressions arranged between the surface regions; and/or
wherein at least some of the three-dimensional structural elements are formed as venting structures arranged between the surface regions.

9. The method according to any one of the preceding claims,
wherein at least some of the three-dimensional structural elements (20; 2; 24; 26; 32; 300; 504; 601; 701) are formed with a width from 0.2 µm to 4 µm, preferably 0.5 µm to 3 µm, and/or a height from 1 µm to 10 µm, preferably 2 µm to 6 µm, and/or
wherein at least some of the three-dimensional structural elements (20; 22; 24; 26; 32; 300; 504; 601; 701) are formed with the same or different dimensions.

10. The method according to one of the preceding claims,
wherein at least some of the surface regions (12; 120; 500, 501, 502; 600; 700) are formed with the same size and/or the same shape.

11. The method according to one of the preceding claims,
wherein at least some of the surface regions (12; 120; 500, 501, 502; 600; 700), as seen in a plan view of the surface structure (10; 30; 40), are formed with a contour selected from a polygon contour, a contour complementary to one another and a free-form contour; and/or
wherein at least some of the surface regions are provided with one or more markings.

12. The method according to one of the preceding claims,
wherein in step a) the three-dimensional surface structure (10; 30; 40) is produced at least partially by an embossing process; and/or
wherein in step a) the three-dimensional surface structure (10; 30; 40) is produced by a process selected from:
a1) an embossing process comprising the steps of: applying a soluble embossing layer (13) as a release layer to the substrate and carrying out a lithographic, in particular photolithographic, process, a hot embossing or an UV embossing; and
a2) an embossing process comprising the steps of: providing a substrate that is deformable by hot embossing or applying an insoluble embossing layer (130) to the substrate, carrying out hot embossing or UV embossing; and applying a soluble, in particular water-soluble, release layer.

13. The method according to any of the preceding claims,
wherein in step b) a pigment material layer (19) comprising one or more inorganic materials and/or one or more organic materials is applied to the surface structure (10; 30; 40).

14. Pigments obtained by the method according to one of the preceding claims.

15. Use of the pigments according to claim 14 in a printing ink.

## Revendications

1. Procédé de production de pigments de taille et de forme définies, comprenant les étapes :
a) production d'une structure de surface tridimensionnelle (10 ; 30 ; 40) sur un substrat (11), dans laquelle des régions de surface (12 ; 120 ; 500, 501, 502 ; 600 ; 700) sont disposées en colonnes (14, 15 ; 140, 150 ) sont formés qui sont chacun délimités par une pluralité d'éléments structurels tridimensionnels (20 ; 22 ; 24 ; 26 ; 32 ; 300 ; 504 ; 601 ; 701) ;
b) application d'une couche de matériau pigmentaire (19) sur la structure de surface (10 ; 30 ; 40) ;
c) détacher la couche de matériau pigmentaire (19) de la structure de surface (10 ; 30 ; 40) et produire des pigments,
**caractérisé en ce que**
à l'étape a), des zones de surface voisines ne sont que partiellement séparées les unes des autres par les éléments de structure tridimensionnels et restent par ailleurs reliées entre elles.

2. Procédé selon la revendication 1,
dans lequel les zones de surface sont délimitées par les éléments de structure tridimensionnels (20 ; 22 ; 24 ; 26 ; 32 ; 300 ; 504 ; 601 ; 701) à raison de 1 % à 99 %, de préférence de 10 % à 90 %, plus préférablement de 30 % à 70 %, respectivement ;
et/ou
dans lequel la structure de surface (10 ; 30 ; 40) et/ou les zones de surface étant occupées par les éléments de structure tridimensionnels (20 ; 22 ; 24 ; 26 ; 32 ; 300 ; 504 ; 601 ; 701) à raison de 0,1 à 10 %, de préférence moins de 7 %.

3. Procédé selon l'une des revendications précédentes,
dans lequel les éléments structurels tridimensionnels (20 ; 22 ; 24 ; 26 ; 32 ; 300 ; 504 ; 601 ; 701) sont disposés séparément les uns des autres ; et/ou
dans lequel les éléments structurels tridimensionnels (20 ; 22 ; 24 ; 26 ; 32 ; 300 ; 504 ; 601 ; 701) sont disposés sur les coins et/ou les côtés des zones de surface (12 ; 120 ; 500, 501, 502 ; 600 ; 700) en vue de dessus de la structure de surface (10 ; 30 ; 40).

4. Procédé selon l'une des revendications précédentes,
dans lequel chaque frontière entre des zones de surface adjacentes (12 ; 120 ; 500, 501, 502 ; 600 ; 700) est pourvue d'au moins deux des éléments structurels tridimensionnels (20 ; 22 ; 24 ; 26 ; 32 ; 300 ; 504 ; 601 ; 701) qui sont disposés le long de la frontière ; et/ou
dans lequel au moins une partie des zones de surface adjacentes est formée avec une surface partiellement continue.

5. Procédé selon l'une des revendications précédentes,
dans lequel au moins une partie des éléments structurels tridimensionnels (20 ; 22 ; 24 ; 26 ; 32 ; 300 ; 504 ; 601 ; 701) est formée, en vue de dessus de la structure de surface (10 ; 30 ; 40), comme un motif régulier délimitant partiellement les zones de surface (12 ; 120 ; 500, 501, 502 ; 600 ; 700) ; et/ou
dans lequel au moins une partie des éléments structurels tridimensionnels (20 ; 22 ; 24 ; 26 ; 32 ; 300 ; 504 ; 601 ; 701) sont formés, en vue de dessus de la structure de surface (10 ; 30 ; 40), comme un motif choisi parmi un motif polygonal, un motif de formes mutuellement complémentaires et un motif de forme libre.

6. Procédé selon l'une des revendications précédentes,
dans lequel au moins une partie des zones de surface (12 ; 120 ; 500, 501, 502 ; 600 ; 700) est formée parallèlement à un niveau de base de la structure de surface ; et/ou
dans lequel au moins une partie des zones de surface est formée avec une pente inclinée par rapport à un niveau de base de la structure de surface.

7. Procédé selon l'une des revendications précédentes,
dans lequel au moins une partie des zones de surface est formée à un même niveau de hauteur ; et/ou
dans lequel au moins une partie des zones de surface est formée à différents niveaux de hauteur ; et/ou
dans lequel au moins une partie des zones de surface adjacentes est formée à différents niveaux de hauteur.

8. Procédé selon l'une des revendications précédentes,
dans lequel au moins une partie des éléments structurels tridimensionnels sont formés en tant qu'élévations disposées entre les zones de surface ; et/ou
dans lequel au moins une partie des éléments structurels tridimensionnels sont formés comme des creux disposés entre les zones de surface ; et/ou
dans lequel au moins une partie des éléments structurels tridimensionnels sont formés comme des structures d'aération disposées entre les zones de surface.

9. Procédé selon l'une des revendications précédentes,
dans lequel au moins une partie des éléments structurels tridimensionnels (20 ; 2 ; 24 ; 26 ; 32 ; 300 ; 504 ; 601 ; 701) sont formés avec une largeur de 0,2 µm à '4 µm, de préférence de 0,5 µm à 3 µm, et/ou une hauteur de 1 µm à 10 µm, de préférence de 2 µm à 6 µm ; et/ou
dans lequel au moins une partie des éléments structurels tridimensionnels (20 ; 22 ; 24 ; 26 ; 32 ; 300 ; 504 ; 601 ; 701) sont formés avec des dimensions identiques ou différentes.

10. Procédé selon l'une des revendications précédentes,
dans lequel au moins une partie des zones de surface (12 ; 120 ; 500, 501, 502 ; 600 ; 700) sont formées avec la même taille et/ou la même forme.

11. Procédé selon l'une des revendications précédentes,
dans lequel au moins une partie des zones de surface (12 ; 120 ; 500, 501, 502 ; 600 ; 700) sont formées, en vue de dessus de la structure de surface (10 ; 30 ; 40), avec un contour choisi parmi un contour polygonal, un contour mutuellement complémentaire et un contour de forme libre ; et/ou
dans lequel au moins une partie des zones de surface étant pourvue d'un ou plusieurs marquages.

12. Procédé selon l'une des revendications précédentes,
dans lequel, à l'étape a), la création de la structure de surface tridimensionnelle (10 ; 30 ; 40) est réalisée au moins en partie par un procédé d'estampage ; et/ou
dans lequel, à l'étape a), la génération de la structure de surface tridimensionnelle (10 ; 30 ; 40) est effectuée par un procédé choisi parmi :
a1) un procédé de gaufrage comprenant les étapes suivantes : Application d'une couche de gaufrage soluble (13) comme couche de libération sur le substrat et réalisation d'un processus lithographique, en particulier photolithographique, d'un gaufrage à chaud ou d'un gaufrage UV ; et
a2) un procédé de gaufrage comprenant les étapes suivantes : Fournir un substrat déformable par estampage à chaud ou appliquer une couche d'estampage insoluble (130) sur le substrat, effectuer un estampage à chaud ou un estampage UV ; et appliquer une couche de libération soluble, en particulier soluble dans l'eau.

13. Procédé selon l'une des revendications précédentes,
dans lequel, à l'étape b), une couche de matériau pigmentaire (19) comprenant un ou plusieurs matériaux inorganiques et/ou un ou plusieurs matériaux organiques est appliquée sur la structure de surface (10 ; 30 ; 40).

14. Pigments obtenus par le procédé selon l'une des revendications précédentes.

15. Utilisation de pigments selon la revendication 14 dans une encre d'impression.
